# EUROPÄISCHE PATENTSCHRIFT

(11) **EP 1 785 064 B1**
(45) Veröffentlichungstag und Bekanntmachung des Hinweises auf die Patenterteilung: **09.07.2008**
(21) Anmeldenummer: 06021620.7
(22) Anmeldetag: 16.10.2006
(51) Int. Cl.: A47B 97/00, A47B 97/04, G03B 21/56

(54) **Vorrichtung zum Halten einer Aktivtafel**
Device for holding a combined board and projection screen
Dispositif destiné à supporter un panneau de projection

(30) Priorität: 10.11.2005 DE 102005054466
(43) Veröffentlichungstag der Anmeldung: 16.05.2007
(73) Patentinhaber: GfP (Gesellschaft für Produktivitätsplanung und Produktentwicklung)mbH, 74613 Öhringen (DE)
(72) Erfinder: Schaffitzel, Hermann, 74613 Öhringen (DE)
(74) Vertreter: Patentanwälte Ruff, Wilhelm, Beier, Dauster & Partner

(56) Entgegenhaltungen:
- EP-A2- 0 114 676
- US-A- 4 750 832

## Beschreibung

Die Erfindung betrifft eine Vorrichtung zum höhenverstellbaren Halten einer im Wesentlichen vertikal angeordneten Aktivtafel in einem Raum.

Es ist ein Tafelsystem bekannt (EP 15 13 126 A1), bei welchem eine Kreidetafel und eine Aktivtafel hintereinander in Pylonen der gleichen Rahmenkonstruktion angeordnet sind, die vor einer Wand des Unterrichtsraums anbringbar ist. Die Kreidetafel und die Aktivtafel (Whiteboard) sind derart miteinander gekoppelt, dass bei einem Absenken der einen Tafel die andere Tafel angehoben wird. Die Aktivtafel ist drahtlos mit einem Computer verbunden, mit dem ein Projektor oder Beamer und ein Drucker verbunden sind. In ein von dem Beamer auf der Aktivtafel abgebildetes Bild kann mittels eines elektronischen Stiftes hineingeschrieben oder gezeichnet werden, wobei diese Ergänzungen an den Rechner weitergeleitet werden. Bei dem bekannten Tafelsystem ist es nachteilig, dass nicht beide Tafeln gleichzeitig benutzt werden können, d.h. die Kreidetafel und die Aktivtafel. Des weiteren muss der Projektor oder Beamer, der in Abstand zu der Aktivtafel beispielsweise auf einem Tisch oder einem verfahrbaren Gestell angeordnet ist, jeweils neu exakt zu der Aktivtafel justiert werden, damit ein scharfes Bild entsteht.

Der Erfindung liegt die Aufgabe zugrunde, eine Vorrichtung der eingangs genannten Art zu schaffen, die unabhängig von der Halterung einer Kreidetafel ist.

Diese Aufgabe wird dadurch gelöst, dass ein im Wesentlichen horizontal anzuordnender Rahmen vorgesehen ist, der die Aktivtafel und einen zu der Aktivtafel ausgerichteten Projektor oder Beamer aufnimmt und der mit verstellbaren Haltemitteln versehen ist, die ein Verstellen des Rahmens mit der im Wesentlichen lotrecht zu dem Rahmen ausgerichteten Aktivtafel zwischen einer oberen Position und einer unteren Schreibposition gestatten.

Da der Beamer, der ebenfalls an dem Rahmen angebracht ist, zusammen mit der Aktivtafel verstellt wird, kann er sowohl in der oberen Position als auch in der unteren Position auf die Aktivtafel ein Bild werfen, ohne dass er jeweils neu zu der Aktivtafel justiert werden muss. Wenn die Aktivtafel zusammen mit einer Kreidetafel eingesetzt wird, so ist die Zugänglichkeit der Kreidetafel nicht behindert, wenn sich die Aktivtafel in der oberen Position befindet. Auf die Aktivtafel kann somit in dieser Position ein Bild projiziert werden, während gleichzeitig die Kreidetafel benutzbar ist.

In Ausgestaltung der Erfindung wird vorgesehen, dass die Haltemittel eine Gewichtsausgleichseinrichtung enthalten. Dadurch können die Kräfte gering gehalten werden, die dazu benötigt werden, um die Aktivtafel mit dem Rahmen mitsamt des Beamers oder Projektors zwischen der oberen Position und der unteren Position zu verstellen.

Bei einer anderen Ausgestaltung der Erfindung wird vorgesehen, dass die Haltemittel mit einem motorischen Antrieb versehen sind. Dadurch ist es möglich, die Verstellung zwischen der oberen und der unteren Position durchzuführen, ohne an dem Rahmen oder der Aktivtafel anzugreifen. Außerdem ist es möglich, dem vorzugsweise elektromotorischen Antrieb einen abschließbaren Schalter zuzuordnen, so dass ein unbefugtes Verstellen der Aktivtafel aus der oberen Position in die untere Schreibposition verhindert werden kann.

In weiterer Ausgestaltung der Erfindung wird vorgesehen, dass die Haltemittel derart gestaltet sind, dass für die Aktivtafel ein Weg mit einer horizontalen Komponente gegeben ist. Dadurch ist es insbesondere möglich, die Aktivtafel so an eine Stirnwand des Unterrichtsraums heranzubewegen, dass sie hinter der höhenverstellbaren Kreidetafel zu liegen kommt und damit in ihrer oberen Position die Höhenverstellung der Kreidetafel nicht behindert.

Weitere Merkmale und Vorteile der Erfindung ergeben sich aus der nachfolgenden Beschreibung der in den Zeichnungen dargestellten Ausführungsbeispiele und den Unteransprüchen.
- Fig. 1: zeigt einen Teilschnitt durch einen Klassenraum einer Schule mit einer Kreidetafel und einer erfindungsgemäßen Vorrichtung zum Halten einer Aktivtafel,
- Fig. 2: einen Teilschnitt durch einen Unterrichtsraum mit einer abgewandelten Ausführungsform einer Vorrichtung zum Halten einer Aktivtafel,

- Fig. 3: einen Teilschnitt durch einen Unterrichtsraum mit einer dritten Ausführungsform einer erfindungsgemäßen Vorrichtung,
- Fig. 4: einen Teilschnitt ähnlich Fig. 3 durch eine weitere Ausführungsform einer erfindungsgemäßen Vorrichtung und
- Fig. 5: einen Teilschnitt durch einen Laborraum mit einer an Labormöbeln angebrachten, erfindungsgemäßen Vorrichtung.

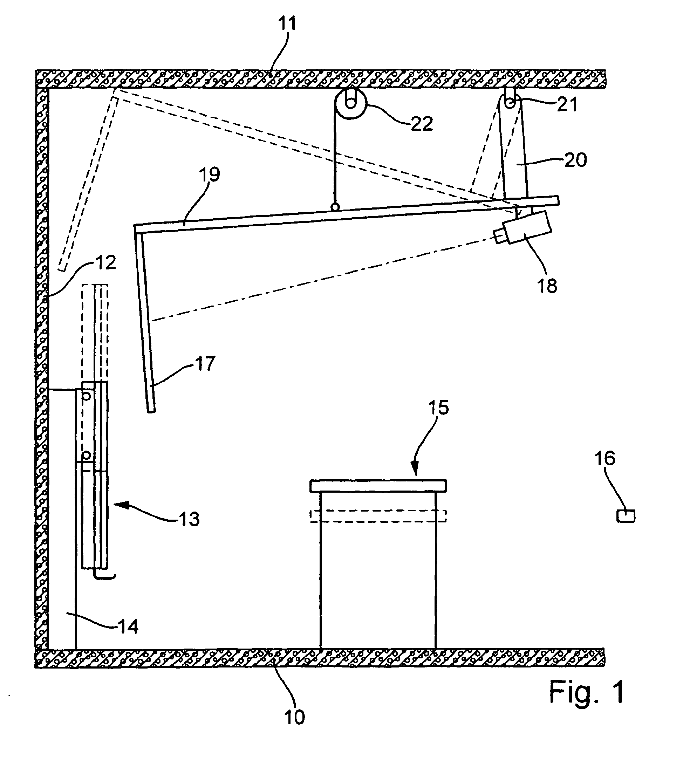

Von einem Klassenraum ist in Fig. 1 der Boden 10, die Decke 11 und eine Stirnwand 12 dargestellt. An der Stirnwand 12, die üblicherweise eine Höhe von etwa drei Metern hat, ist eine Kreidetafel 13 angeordnet, die in einem Gestell 14 höhenverstellbar ist. Die Kreidetafel 13 besteht beispielsweise aus einem Mittelteil und zwei aufklappbaren Seitenflügeln. Die Kreidetafel 13 ist zwischen der gezeigten Position und der gestrichelt dargestellten Position höhenverstellbar.

In einem Abstand von etwa 1,20 Meter zu der Kreidetafel 13 ist auf dem Boden ein Lehrerpult 15 aufgestellt. In einem Abstand von etwa noch einmal 1,20 Meter sind dann die Schülertische einer ersten Reihe angeordnet, von welchen in Fig. 1 eine Tischplatte 16 angedeutet ist.

Zusätzlich zu der Kreidetafel 13 ist eine Aktivtafel 17 vorgesehen, deren beschichtete, als Projektionsfläche dienende Oberfläche sensitiv ist. Die Aktivtafel 17 ist in nicht näher dargestellter Weise vorzugsweise drahtlos mit einem Computer, beispielsweise einem PC, verbunden, an den ein Beamer 18 und vorzugsweise auch ein nicht dargestellter Drucker angeschlossen sind, Mittels des Beamers 18 kann auf der Aktivtafel 17 ein Bild projiziert werden, in das mittels eines elektronischen Stiftes hineingeschrieben oder gezeichnet werden kann, wobei diese zusätzlichen Informationen an den Computer weitergeleitet werden.

Die Aktivtafel 17 ist im Bereich der Stirnwand 12 des Unterrichtsraum angeordnet. Sie wird von einem Rahmen 19 aufgenommen, der im Wesentlichen horizontal ausgerichtet ist. An dem Rahmen 19 ist auch der Beamer 18 angebracht. Der Beamer 18 besitzt eine definierte Position, in der das auf der Aktivtafel 17 erzeugte Bild kalibriert ist. Der Rahmen 19 ist mittels eines Schwenkarmes 20 an der Decke 11 angebracht. Der Schwenkarm 20 ist um eine horizontale, quer zur Stirnwand 12 verlaufende Achse 21 verschwenkbar.

Durch das Verschwenken des Rahmens 19 um die Schwenkachse 21 kann die Aktivtafel 17 aus der mit ausgezogenen Linien dargestellten unteren Schreibposition in die gestrichelt dargestellte obere Position verstellt werden. Dabei verändert sich der Abstand zwischen der Aktivtafel 17 und dem Beamer 18 nicht, so dass auch nach dem Verschwenken Beamer 18 und Aktivtafel 17 benutzt werden können.

Wie in Fig. 1 zu sehen ist, kann der Rahmen 19 mit der Aktivtafel 17 aus der gestrichelten dargestellten oberen Position, der Ruheposition, in die Schreibposition geschwenkt werden, wenn die Kreidetafel 13 nach unten abgesenkt worden ist. In der oberen Stellung des Rahmens 19 und der Aktivtafel 17 ist die Kreidetafel 13 völlig frei und kann unbehindert in der Höhe verstellt werden.

In der Schreibposition befindet sich die Aktivtafel 17 in einer Höhe, in welcher sie auch von kleinen Personen ohne weiteres gut beschrieben werden kann. In dieser Position ist die lotrecht zu dem Rahmen 19 ausgerichtete Aktivtafel 17 etwas zur Vertikalen geneigt, so dass ihre Unterkante dem Benutzer näher ist als der obere Bereich. In dieser Position lässt sich die Aktivtafel 17 besonders gut beschreiben. Wird der Rahmen 19 mit der Aktivtafel 17 und dem Beamer 18 in die obere Position verschwenkt, so verliert der Beamer 18 seine Justierung und Kalibrierung bezüglich der Aktivtafel 17 nicht. In dieser Position kann er somit weiter zum Projizieren von Bildern oder dergleichen benutzt werden. Dabei ist die Aktivtafel 17 leicht zu dem Betrachter hin geneigt, so dass auf ihr erscheinende Bilder und/oder Beschriftungen sehr gut für die im Raum befindlichen Personen sichtbar ist.

Der Rahmen 19 kann manuell verschwenkt werden, beispielsweise mittels eines oder mehrerer an der Aktivtafel 17 seitlich oder an der Unterkante angebrachten Griffen. Dabei wird zweckmäßigerweise eine Gewichtsentlastung beispielsweise mittels einer Federrolle 22 vorgesehen, die ein Seil aufweist, das an den Rahmen 19 angelenkt ist. Bei einer abgewandelten Ausführungsform wird anstelle einer Gewichtsentlastung ein elektromotorischer Antrieb vorgesehen, der an der Decke 11 angebracht ist und beispielsweise über ein Seil an den Rahmen 19 angelenkt ist. Das Anheben und Absenken des Rahmens 19 mit der Aktivtafel 17 und dem Beamer 18 kann beispielsweise dann mittels eines an dem Lehrerpult 15 angebrachten Schalters erfolgen.

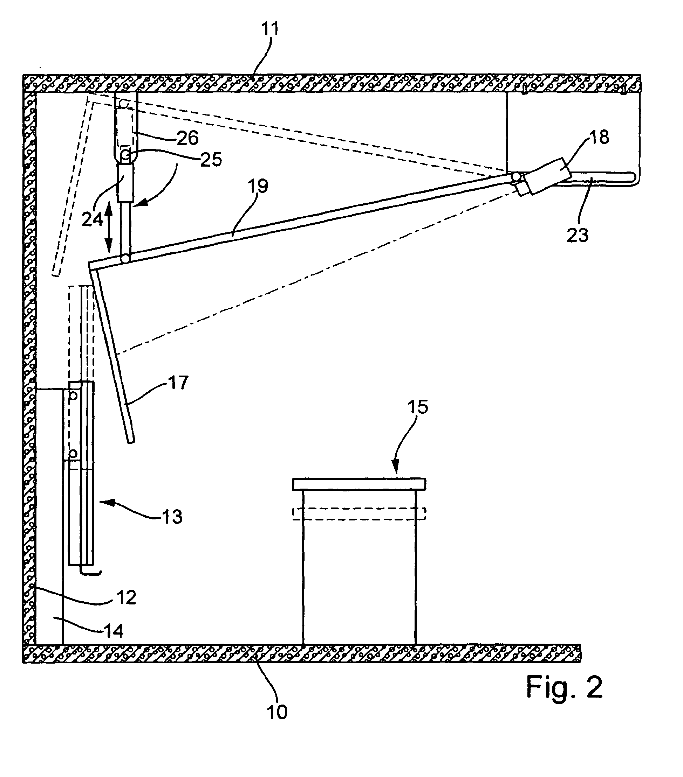

Bei der Ausführungsform nach Fig. 2 ist ebenfalls ein Rahmen 19 vorgesehen, an welchem die Aktivtafel 17 und der Beamer 18 angebracht sind. Der Rahmen 19 ist im Bereich seines der Aktivtafel 17 abgewandten Endes, d.h. im Bereich des Beamers 18, mit Rollen in einer horizontal verlaufenden Kulisse 23 geführt. Der Rahmen 19 kann in der Kulisse 23 in horizontaler Richtung relativ zu der Stirnwand 12 des Unterrichtsraums bewegt werden. Der Rahmen 19 ist im Bereich der Aktivtafel 17 mittels eines Gelenkarmes 24 gehalten, der um eine Achse 25 eines an der Decke 11 befestigten Hängehalters 26 verschwenkbar ist. Der Schwenkarm 24 ist teleskopisch ausfahrbar. Beispielsweise ist er als eine Gasfeder ausgebildet.

Der Rahmen 19 mit der Aktivtafel 17 und dem Beamer 18 ist zwischen der mit ausgezogenen Linien dargestellten Schreibposition und der gestrichelt dargestellten oberen Position verstellbar. Um den Rahmen 19 aus der dargestellten Position in die gestrichelte Position zu bringen, wird zunächst der teleskopische Schwenkarm 24 eingefahren. Dabei wird der Schwenkarm 24 in Richtung zu dem Beamer 18 hin verschwenkt, so dass der Rahmen 19 in der Kulisse 23 verschoben wird. Nachdem der teleskopische Schwenkarm 24 eingefahren ist, wird er nach oben um die Achse 25 des Halters 26 verschwenkt, so dass dann der Rahmen 19 mit der Aktivtafel 17 und dem Beamer 18 in die gestrichelte Position gelangt. Dabei wird der Rahmen 19 mit seinen Rollen wieder in der Kulisse 23 verschoben. In der oberen Position gelangt die Aktivtafel 17 somit bis dicht an die Stirnwand 12 heran, so dass die Kreidetafel 13 unbehindert in der Höhe verstellt werden kann. Mittels der Vorrichtung nach Fig. 2 zum Halten des Rahmens 19 mit Aktivtafel 17 und Beamer 18 ist es möglich, eine Aktivtafel 17 einzusetzen, die in vertikaler Richtung eine größere Länge aufweist.

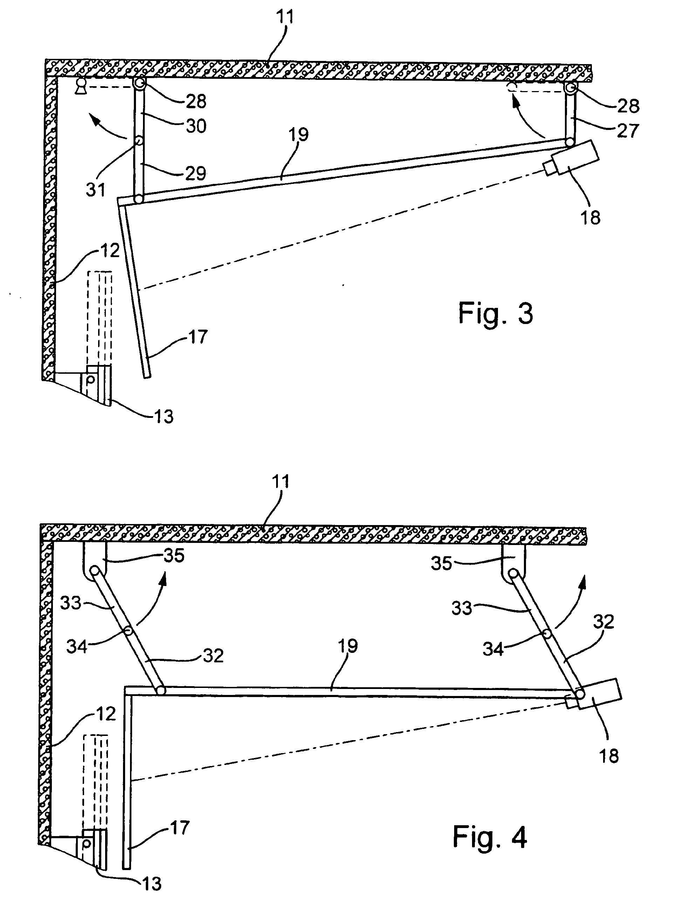

Bei der Ausführungsform nach Fig. 3 sind als Haltemittel für den Rahmen 19 im Bereich des Beamers 18 einfache Gelenkarme 27 vorgesehen, die gelenkig an einem an der Decke 11 angebrachten Lager 28 gelagert und gelenkig mit dem Rahmen 19 verbunden sind. Die Gelenkarme 27 sind aus der dargestellten Stellung in die gestrichelt dargestellte Stellung mitsamt dem Rahmen 19 verschwenkbar, in dem sie parallel zu der Decke 11 unterhalb der Decke liegen.

Im Bereich der Aktivtafel 17 ist der Rahmen 19 mit Doppelgelenkarmen 29, 30 gehalten. Der Gelenkarm 30 ist in einem Lager eines Halters 28 gelagert, der an der Decke 11 befestigt ist. Die beiden Gelenkarme 29, 30 sind in einem Gelenk 31 miteinander verbunden. Bei dem Verschwenken aus der gezeigten Schreibposition in die nicht dargestellte obere Ruheposition werden die Gelenkarme 27 und das Gelenk 31 verschwenkt, bis es in der Position dicht unterhalb der Decke 11 zu liegen kommt. In dieser Position liegen dann die Gelenkarme 29, 30 nebeneinander parallel zur Decke 11.

Bei der Ausführungsform nach Fig. 4 ist der Rahmen 19 im Bereich der Aktivtafel 17 und im Bereich des Beamers 18 mit Doppelgelenkarmen 32, 33 parallelogrammartig an der Decke 11 gehalten. Die Gelenkarme 32 sind gelenkig an dem Rahmen 19 angebracht und über ein Gelenk 34 mit den Gelenkarmen 33 verbunden. Diese sind ihrerseits gelenkig an Haltern 35 angebracht, die an der Decke 11 befestigt sind. Alle Achsen verlaufen parallel zur Stirnwand 12 des Unterrichtsraumes. Um den Rahmen 19 mit der Aktivtafel 17 und dem Beamer 18 aus der dargestellten unteren Position, der Schreibposition, in eine obere Ruheposition zu bringen, werden zunächst die oberen Gelenkarme 33 um die Achsen der Halter 35 verschwenkt. Dadurch wird der Rahmen 19 nach oben angehoben. Wenn die Gelenkarme 33 ausreichend hochgeschwenkt und vorzugsweise bereits parallel zur Decke liegen, werden die Schwenkarme 32 im Gegenuhrzeigersinn verschwenkt, bis die parallel zu den Gelenkarmen 33 liegen. Die Aktivtafel 17 befindet sich dann in einer oberen Position parallel zur Stirnwand 12 und dicht an dieser Stirnwand 12. Die Kreidetafel 13 kann dann ohne jegliche Behinderung in die gestrichelt dargestellten Position angehoben werden.

Bei einer abgewandelten Ausführungsform werden für den Rahmen 19 schräg nach oben zur Stirnwand 12 hin verlaufende Kulissenführungen vorgesehen, in denen der Rahmen 19 parallel zu sich selbst zwischen der Schreibposition und der oberen Position verschiebbar ist. Dabei können gerade Kulissenführungen vorgesehen werden. Bei einer abgewandelten Ausführungsform werden Kulissenführungen mit einem gekrümmten Verlauf vorgesehen, d.h. mit einem im Wesentlichen vertikalen Abschnitt und mit einem im Wesentlichen horizontalen Abschnitt. Der Rahmen 19 mit der Aktivtafel 17 und dem Beamer 18 kann somit aus der unteren Schreibstellung zunächst im Wesentlichen in vertikaler Richtung angehoben werden. In der oberen Stellung wird er dann in der Kulissenführung hin zu der Stirnwand 12 verschoben, so dass die Aktivtafel 17 zwischen der Stirnwand und der Kreidetafel 13 zu liegen kommt.

Bei einer nicht dargestellten Ausführungsform wird die Einheit aus Aktivtafel und Beamer mittels Haltemitteln gehalten, die an der Stirnseite 12 des Unterrichtsraumes angebracht werden. Die Haltemittel können dann an einem die Aktivtafel 17 seitlich einfassenden Rahmenteilen angebracht werden. Der im Wesentlichen horizontal verlaufende Rahmen 19 kann dann vereinfacht werden, beispielsweise zu einer Stange, die den Beamer 18 trägt. Derartige Haltemittel können beispielsweise Gelenkarme sein, die mittels eines Halters an der Stirnwand befestigt sind und die zwischen einer im Wesentlichen horizontalen Position die Aktivtafel 17 in die untere Schreibposition bringen und in einer nach oben gerichteten im Wesentlichen vertikalen Position die Aktivtafel mit dem Beamer in die obere Position bringen.

Der teleskopisch ausfahrbare Gelenkarm 24 der Ausführungsform nach Fig. 2 ist beispielsweise eine Gasfeder. Anstelle einer Gasfeder ist bei einer anderen Ausführungsform ein motorischer, teleskopierbarer Antrieb vorgesehen. Auch bei den Ausführungsformen nach Fig. 1, 3 oder 4 sind teleskopische Gelenkarme einsetzbar, die als Gasfeder oder hydraulische oder pneumatische oder motorische Antriebe gestaltet sind.

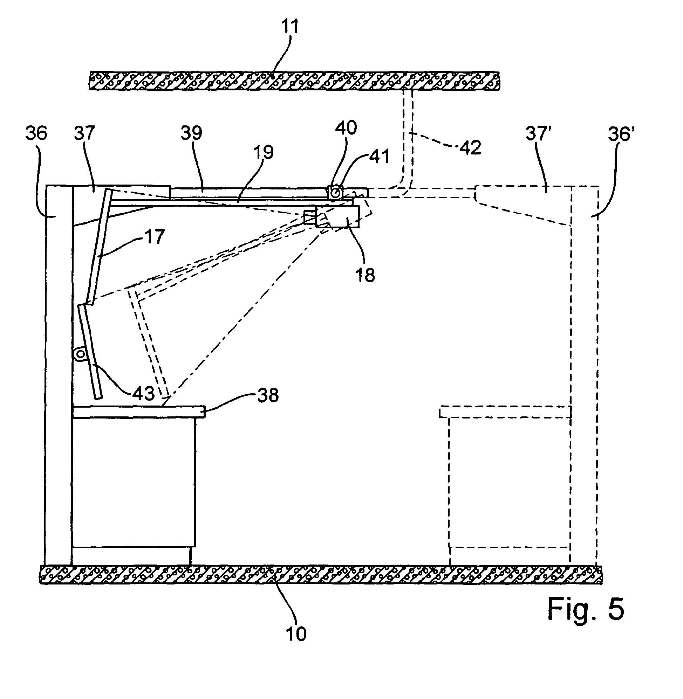

Die Aktivtafel 17, die mittels eines Rahmens 19 mit einem Beamer 18 zu einer Baueinheit zusammengefasst ist, kann grundsätzlich auch in einem Labor mit Vorteil eingesetzt werden. Die Aktivtafel kann bei diesem Anwendungszweck eine geringere Abmessung aufweisen, da die auf ihr enthaltenen Informationen nicht von größerer Entfernung und / oder einer größeren Anzahl von in einiger Entfernung befindlichen Personen gesehen werden müssen. Grundsätzlich ist es möglich alle, die bereits anhand von Fig. 1 bis 4 erläuterten Haltemittel für die Einheit aus Aktivtafel und Beamer vorzusehen. Bei der Ausführungsform nach Fig. 5 ist jedoch eine Konstruktion vorgesehen, bei welcher der Rahmen 19 mit der Aktivtafel 17 und dem Beamer 18 unabhängig von der Decke eines Raumes an Labormöbeln gehalten ist. Von der Rückwand 36 einer Laborzelle ragt im Bereich des oberen Endes eine Konsole 37 über den Labortisch 38. Von dieser Konsole 37 ragt in horizontaler Richtung eine Tragkonstruktion 39 über den Arbeitsbereich hinaus. Diese Tragkonstruktion 39 nimmt ein verschwenkbares Haltemittel 40 auf, an welchem der Rahmen 19 befestigt ist. Dieses verschwenkbare Haltemittel 40 ist beispielsweise eine motorisch verschwenkbare, in einem Halter gehaltene Achse 41, an der der Rahmen 19 befestigt ist.

Um die Tragkonstruktion 39 zu sichern, kann diese mit einem nach oben gerichteten Arm 42 versehen sein, der an der Decke 11 des Laborraumes befestigt ist. Bei einer abgewandelten Ausführungsform, bei welcher der Laborzelle 36 eine gestrichelt dargestellte Laborzelle 36' gegenüberliegend angeordnet ist, wird vorgesehen, dass die Tragkonstruktion 39 sich zwischen den beiden Konsolen 37, 37' erstreckt. Bei dieser Ausführungsform liegt der Rahmen 19 in der oberen Position im Wesentlichen in einer horizontalen Ebene und ist in der unteren Position nach unten geneigt. Die Aktivtafel 17 ist an dem Rahmen unter einem Winkel angeordnet, der etwas größer als 90° ist.

An der Rückwand der Laborzelle ist bei dem Ausführungsbeispiel eine Schreibtafel 43 befestigt.

Bei einer abgewandelten Ausführungsform wird vorgesehen, dass die Tragkonstruktion 39 schienenartig ausgebildet und das Haltemittel 40 schlittenartig gestaltet ist. Es ist dann möglich, das Haltemittel 40 zusammen mit dem Rahmen sowie mit der Aktivtafel 17 und dem Beamer in horizontaler Richtung zu verschieben.

Die Befestigung der Tragkonstruktion 39 erfolgt an zwei benachbarten Konsolen der Rückwand 36 der Laborzelle, so dass der Rahmen 19 zwischen den Konsolen 37 nach oben verschwenkbar ist.

## Patentansprüche

1. Vorrichtung zum höhenverstellbaren Halten einer im Wesentlichen vertikal angeordneten Aktivtafel (17) in einem Raum, **dadurch gekennzeichnet, dass** ein im Wesentlichen horizontal anzuordnender Rahmen (19) vorgesehen ist, der die Aktivtafel (17) und einen zu der Aktivtafel ausgerichteten Projektor oder Beamer (18) aufnimmt und der mit verstellbaren Haltemitteln (20, 22; 23, 24, 25, 26; 27, 28, 29, 30; 32, 33, 35; 40, 41) versehen ist, die ein Verstellen des Rahmens mit im Wesentlichen lotrecht zu dem Rahmen ausgerichteter Aktivtafel zwischen einer oberen Position und einer unteren Schreibposition gestatten.

2. Vorrichtung nach Anspruch 1, **dadurch gekennzeichnet, dass** die Haltemittel eine Gewichtsentlastung (22) enthalten.

3. Vorrichtung nach Anspruch 1, **dadurch gekennzeichnet, dass** die Haltemittel mit einem motorischen Antrieb versehen sind.

4. Vorrichtung nach einem der Ansprüche 1 bis 3, **dadurch gekennzeichnet, dass** die Haltemittel derart gestaltet sind, dass für die Aktivtafel (17) ein Weg mit einer horizontalen Komponente gegeben ist.

5. Vorrichtung nach Anspruch 4, **dadurch gekennzeichnet, dass** die Haltemittel derart gestaltet sind, dass die Aktivtafel (17) beim Verstellen aus der oberen Position zunächst ein Weg mit einer im Wesentlichen horizontalen Komponente und danach ein Weg mit einer im Wesentlichen vertikalen Komponente vorgesehen ist.

6. Vorrichtung nach einem der Ansprüche 1 bis 5, **dadurch gekennzeichnet, dass** die Haltemittel an der Decke (11) des Unterrichtsraums anbringbare Gelenkarme (24, 27, 29, 30, 32, 33) sind.

7. Vorrichtung nach Anspruch 6, **dadurch gekennzeichnet, dass** wenigstens einer der Gelenkarme (24) teleskopisch ausfahrbar ist.

8. Vorrichtung nach einem der Ansprüche 1 bis 7, **dadurch gekennzeichnet, dass** das der Aktivtafel (17) abgewandte Ende des Rahmens (19) mit einem an der Decke des Unterrichtsraums anbringbaren Hängehalter (20) schwenkbar gehalten ist.

9. Vorrichtung nach Anspruch 87, **dadurch gekennzeichnet, dass** der Hängehalter (20) um eine unmittelbar unter der Decke (11) des Unterrichtsraums angeordnete Achse (21) schwenkbar ist.

10. Vorrichtung nach einem der Ansprüche 1 bis 9, **dadurch gekennzeichnet, dass** der Rahmen (19) im Bereich der Aktivtafel (17) und/oder im Bereich seines der Aktivtafel (17) abgewandten Endes in Kulissenführungen (23) gehalten ist.

11. Vorrichtung nach einem der Ansprüche 1 bis 10, **dadurch gekennzeichnet, dass** die Haltemittel (40, 41) an einer Tragkonstruktion (39) angebracht sind, die an einem Labormöbelteil (36) befestigt ist.

12. Vorrichtung nach Anspruch 11, **dadurch gekennzeichnet, dass** eine schienenartige Tragkonstruktion (39) vorgesehen ist, an der die Haltemittel (40, 41) im Wesentlichen in horizontaler Richtung verschiebbar gehalten sind.

## Claims

1. A device for holding a combined board and projection screen (17) in a room such that the latter's height may be adjusted, wherein a frame (19) to be essentially horizontally arranged that accommodates the combined board and projection screen (17) and a projector or beamer (18) aimed at the combined board and projection screen is equipped with adjustable mounting hardware (20, 22; 23, 24, 25, 26; 27, 28, 29, 30; 32, 33, 35; 40, 41) that allows adjusting the frame and combined board and projection screen oriented at essentially a right angle to the frame between an upper position and a lower, writing position is provided.

2. A device according to claim 1, wherein the mounting hardware contains a counterbalancing device (22).

3. A device according to claim 1, wherein the mounting hardware is provided with a motor drive.

4. A device according to any of claims 1 to 3, wherein the mounting hardware is configured such that it yields a trajectory of the combined board and projection screen having a horizontal component.

5. A device according to claim 4, wherein the mounting hardware is configured such that the combined board and projection screen (17) initially undergoes a trajectory having an essentially horizontal component upon leaving its upper position and thereafter undergoes a trajectory having an essentially vertical component.

6. A device according to any of claims 1 to 5, wherein the mounting hardware is hinged arms (24, 27, 29, 30, 32, 33) that may be attached to the classroom ceiling (11).

7. A device according to claim 6, wherein at least one of the hinged arms (24) is telescopically extendable.

8. A device according to any of claims 1 to 7, wherein the end of the frame (19) opposite the combined board and projection screen (17) is held in place on the classroom ceiling by means of a pivotable, suspended, mounting bracket (20).

9. A device according to claim 8, wherein the suspended mounting bracket (20) is pivotable about an axis (21) arranged immediately beneath the classroom ceiling (11).

10. A device according to any of claims 1 to 9, wherein the frame (19) is held in place by means of grooved guides (23) in the vicinity of the combined board and projection screen (17) and/or the vicinity of that end thereof opposite the combined board and projection screen (17).

11. A device according to any of claims 1 to 10, wherein the mounting hardware (40, 41) is attached to a supporting structure (39) that is fastened to a component (36) of an item of laboratory furniture.

12. A device according to claim 11, wherein a supporting structure (39) resembling guide rails, on which the mounting hardware (40, 41) is held such that it may be translated along an essentially horizontal direction, is provided.

## Revendications

1. Dispositif destiné au support réglable en hauteur d'un panneau de projection (17) disposé essentiellement de manière verticale dans une pièce, **caractérisé en ce qu'**un cadre (19) à disposer essentiellement de manière horizontale est prévu, lequel loge le panneau de projection (17) et un projecteur ou beamer (18) orienté vers le panneau de projection et est muni de moyens de support réglables (20, 22 ; 23, 24, 25, 26 ; 27, 28, 29, 30 ; 32, 33, 35 ; 40, 41) qui permettent un réglage du cadre avec le panneau de projection, orienté essentiellement perpendiculairement au cadre, entre une position supérieure et une position d'écriture inférieure.

2. Dispositif selon la revendication 1, **caractérisé en ce que** les moyens de support comprennent un équilibrage de poids (22).

3. Dispositif selon la revendication 1, **caractérisé en ce que** les moyens de support sont munis d'une commande par moteur.

4. Dispositif selon l'une quelconque des revendications 1 à 3, **caractérisé en ce que** les moyens de support sont conçus de manière à ce qu'une trajectoire avec une composante horizontale soit donnée pour le panneau de projection (17).

5. Dispositif selon la revendication 4, **caractérisé en ce que** les moyens de support sont conçus de manière à ce que pour le panneau de projection (17), lors du réglage à partir de la position supérieure, on prévoit d'abord une trajectoire avec une composante essentiellement horizontale et ensuite une trajectoire avec une composante essentiellement verticale.

6. Dispositif selon l'une quelconque des revendications 1 à 5, **caractérisé en ce que** les moyens de support sont des bras articulés (24, 27, 29, 30, 32, 33) pouvant être installés au plafond (11) de la salle de cours.

7. Dispositif selon la revendication 6, **caractérisé en ce qu'**au moins un des bras articulés (24) peut être sorti de manière télescopique.

8. Dispositif selon l'une quelconque des revendications 1 à 7, **caractérisé en ce que** l'extrémité du cadre (19), détournée du panneau de projection (17), est maintenue de manière pivotante à l'aide d'un support suspendu (20) pouvant être installé au plafond de la salle de cours.

9. Dispositif selon la revendication 8, **caractérisé en ce que** le support suspendu (20) est pivotant autour d'un axe (21) disposé directement en-dessous du plafond (11) de la salle de cours.

10. Dispositif selon l'une quelconque des revendications 1 à 9, **caractérisé en ce que** le cadre (19) est maintenu dans des guidages à coulisse dans la partie du panneau de projection (17) et/ou dans la partie de son extrémité détournée du panneau de projection (17).

11. Dispositif selon l'une quelconque des revendications 1 à 10, **caractérisé en ce que** les moyens de support (40, 41) sont installés sur une construction porteuse (39) fixée sur une pièce de meuble de laboratoire (36).

12. Dispositif selon la revendication 11, **caractérisé en ce qu'**une construction porteuse (39) similaire à un rail est prévue, sur laquelle les moyens de support (40, 41) sont maintenus de manière déplaçable essentiellement en direction horizontale.
